# FASCICULE DE BREVET EUROPEEN

(11) **EP 2 158 144 B1**
(45) Date de publication et mention de la délivrance du brevet: **31.10.2012**
(21) Numéro de dépôt: 08805556.1
(22) Date de dépôt: 09.05.2008
(51) Int. Cl.: B65G 1/137

(54) **SYSTEME AUTOMATISE DE PREPARATION DE COLIS**
AUTOMATISIERTES SYSTEM FÜR DIE HERSTELLUNG VON PAKETEN
AUTOMATED SYSTEM FOR PREPARING PARCELS

(30) Priorité: 11.05.2007 FR 0703392
(43) Date de publication de la demande: 03.03.2010
(73) Titulaire: SAVOYE, 21000 Dijon (FR)
(72) Inventeur: KRIZMANIC, Renato, F-21800 Chevigny-Saint-Sauveur (FR); FOULON, Joël, F-21200 Combertault (FR); PIETROWICZ, Stéphane, F-21220 Fixin (FR); ATTAL, Jean-David, F-21000 Dijon (FR); PIETTE, Bernard, F-21000 Dijon (FR)
(74) Mandataire: Guéné, Patrick
(86) Numéro de dépôt international: PCT/FR2008/000651
(87) Numéro de publication internationale: WO 2008/152244

(56) Documents cités:
- EP-A- 1 760 012
- EP-A- 1 767 472
- DE-U1- 20 112 328
- DE-U1- 20 211 321
- JP-A- 63 160 906
- JP-A- 2004 284 759

## Description

La présente invention concerne un système automatisé de préparation de colis de commande de produits, en particulier de préparation de commande à l'unité, ainsi qu'un procédé de préparation de colis mettant en oeuvre ledit système.

Ces systèmes de préparation de colis sont plus particulièrement utilisés dans les entreprises d'expédition et de vente à distance de produits de petit volume. Les principaux exemples d'utilisateurs de ces systèmes automatisés de préparation de colis sont les fournisseurs de matériel de bureau, de vêtements, de produits cosmétiques, d'outillage ou de pièces détachées dans l'industrie mécanique. Ces systèmes permettent de préparer avec un minimum de main-d'oeuvre, dans un délai court et avec un suivi précis des stocks, un colis correspondant à une commande précise d'un client, ladite commande portant sur plusieurs produits en différentes quantités, chacun des produits avec sa quantité étant identifié par une ligne de commande.

Les systèmes automatisés connus de préparation de colis se composent généralement d'un magasin de stockage automatisé renfermant les produits dans des contenants, d'un poste de prélèvement où les produits sont prélevés et placés dans un colis, d'un convoyeur amenant les produits du magasin au poste de prélèvement et réciproquement et d'un système informatique de gestion central.

Dans les systèmes de préparation de commande à l'unité, chaque contenant est associé à une référence unique de produit.

Un magasin de stockage automatisé comprend une pluralité de niveaux de rangements superposés dans lesquels des dispositifs de transfert assurent le déplacement des produits, pour leur mise en place à l'intérieur de zones de stockage et pour leur prélèvement depuis ces zones.

Un premier exemple connu de système automatisé de préparation de colis met ainsi en oeuvre un magasin du type carrousel horizontal. Ce système a pour inconvénient de lier le flux des produits et la capacité de stockage. En outre, il n'est pas possible de réapprovisionner le carrousel pendant qu'il est utilisé pour préparer des colis.

Une autre technologie connue de magasins est celle dans laquelle le dispositif de transfert est constitué par l'association d'au moins une navette de transfert et d'un élévateur. Le magasin de stockage comprend alors des ensembles de rangement, chaque ensemble de rangement étant formé d'une allée desservant de part et d'autre une étagère de stockage à plusieurs niveaux, ladite étagère étant subdivisée sur sa longueur en alvéoles de stockage destinées à accueillir chacune un contenant de produits, cette allée recevant, à chaque niveau de rangement, des voies pour le déplacement d'une navette et un élévateur étant disposé à au moins une des extrémités de l'allée. Une voie est généralement formée de deux rails parallèles et la navette est équipée de roues pour se déplacer sur ces rails. Les navettes peuvent donc se déplacer horizontalement à un niveau donné, mais aussi être amenées d'un niveau à un autre par des élévateurs selon les possibilités prévues par le constructeur du magasin.

On connaît ainsi un exemple de système de préparation de colis basé sur une solution navettes et élévateurs, dans lequel chaque niveau de rangement comporte une navette qui dépose les contenants, qui sont des bacs spécifiques disposés ou non sur des plateaux, dans les élévateurs. Dans ce système, les navettes sont alimentées par des rails conducteurs. Cette solution n'est pas optimale notamment du point de vue de l'occupation des navettes et du coût total de l'installation du fait des quantités requises de rails conducteur et des risques d'immobilisation de la navette en cas d'objet sur les rails générant un mauvais contact électrique entre le rail et la navette.

Selon un autre exemple basé sur cette même technologie, les navettes sont également alimentées par rail conducteur mais peuvent emprunter les élévateurs pour passer d'un niveau à un autre et aussi circuler sur le convoyeur.

Dans les deux derniers exemples, ces systèmes nécessitent le transfert préalable des produits dans des contenants spécifiques au système.

D'autres exemples de réalisation de systèmes de préparation de colis basés sur des solutions de magasin avec navettes et élévateur sont donnés dans les documents DE 202 11 321 U et DE 201 12 328 U.

Le premier propose un système automatisé de prépatation de colis de produits selon le préambule de la revendication 1, dans lequel les étagères du magasin sont subdivisées en sous-secteurs autonomes, chaque sous-secteur comportant un élévateur associé à une navette et une zone tampon de chargement/déchargement des conteneurs depuis ou vers des convoyeurs horizontaux amenant les conteneurs aux postes de prélèvement. Dans DE 201 12 328 U, l'ordonnancement des conteneurs se fait au niveau du magasin de stockage, les produits étant retirés suivant l'ordre sur la liste de commande et dirigés vers les postes de prélèvement à leur sortie du magasin par un système de répartition complexe basé sur des convoyeurs avec des boucles de circulation entrecroisées sur différents niveaux.

Ces systèmes de préparation de colis connus présentent donc divers inconvénients liés à leurs coûts de fabrication, de fonctionnement et de maintenance, aux temps nécessaires à la préparation d'un colis, ainsi qu'à la complexité de la gestion des mouvements des différents éléments.

La présente invention vise donc à remédier à ces inconvénients en proposant une solution originale de système automatisé de préparation de colis de commande de produits qui est évolutif, dont la capacité de stockage est dissociée du flux des produits dans lequel la gestion des mouvements des différents éléments est simplifiée et dont les coûts de production et de fonctionnement sont économiquement avantageux.

A cet égard, il est proposé un système selon la revendication 1.

On comprend bien que ce système permet une plus grande liberté dans la gestion des mouvements des navettes et des élévateurs car l'ordonnancement final est assuré en dehors du magasin. En outre et avantageusement, ce système simplifie la préparation des colis par l'opérateur car les différents contenants de produits se présentent à lui selon un ordre donné et en coïncidence avec les arrivées successives de colis à préparer au poste de prélèvement.

Selon un autre aspect de l'invention, il est proposé un procédé de préparation de colis selon la revendication 9.

D'autres avantages et caractéristiques ressortiront mieux de la description qui va suivre d'une variante d'exécution, donnée à titre d'exemple non limitatif, du système automatisé de préparation de colis, en référence aux figures annexées sur lesquelles :
- la figure 1 est une vue de dessus d'une représentation schématique du système selon l'invention ;
- la figure 2 est une vue partielle en coupe selon l'axe II-II' de la figure 1 du magasin de stockage faisant partie du système selon l'invention.

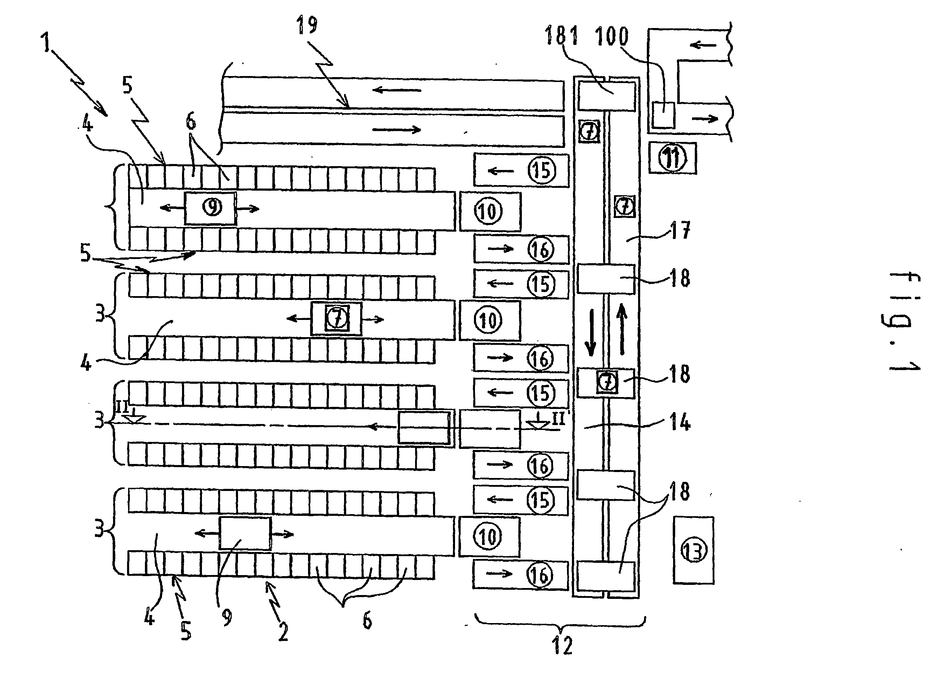

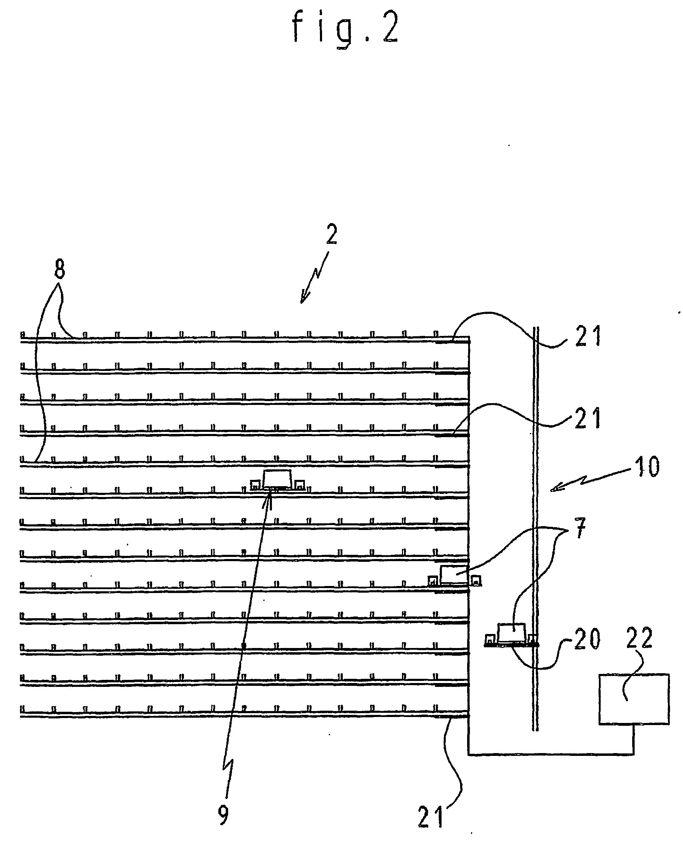

En référence aux figures 1 et 2, le système automatisé 1 de préparation de colis 100 comprend un magasin de stockage 2 représenté ici dans une configuration à quatre ensembles de rangement 3. Chacun des ensembles de rangement 3 est formé d'une allée 4 desservant de part et d'autre une étagère de stockage 5 à plusieurs niveaux, lesdites étagères 5 étant subdivisées sur leur longueur en alvéoles de stockage 6 destinées à accueillir chacune un contenant 7 de produits.

A chaque niveau, l'allée reçoit une voie 8 comprenant deux rails parallèles pour le déplacement d'une navette de transfert 9. A chaque ensemble de rangement 3 est associé un élévateur 10, disposé à une même extrémité de l'allée 4, pour transporter une navette 9 d'un niveau à un autre niveau et comportant un niveau d'entrée et/ou de sortie du magasin 2 pour les contenants 7 de produits. L'entrée et la sortie des contenants 7 peuvent se faire à un même niveau ou à des niveaux différents, selon la configuration du système.

Le système 1 selon l'invention comprend également un poste de prélèvement 11, un ensemble convoyeur principal 12 et un système informatique de gestion central 13.

C'est au poste de prélèvement 11 qu'un opérateur prépare un colis 100 en y plaçant la quantité désirée de produits, déterminée par la liste de commande associée au colis. Le poste de prélèvement comporte à cette fin des moyens de signalisation visuels ou sonores, par exemple un écran, indiquant à l'opérateur la quantité de produit à prélever dans le contenant 7 présent au poste de prélèvement 11. On voit bien l'avantage apporté par ce dispositif qui simplifie la tâche de l'opérateur et permet un gain de temps à la préparation du colis.

L'ensemble convoyeur principal 12 amène les contenants 7 de produits depuis l'entrée/sortie du magasin 2 au poste de prélèvement 11 et réciproquement.

Le système informatique de gestion central 13 contrôle les déplacements de chaque colis 100, chaque navette 9, chaque élévateur 10 et chaque contenant 7 de produits. Le système informatique de gestion central 13 gère également la liste de commande associée à chaque colis et donc l'ordre des lignes de commande en fonction de l'emplacement de stockage des contenants 7 de produit, de la disponibilité des navettes et des élévateurs ainsi que des besoins en produits des différents colis à préparer qui se succèdent au poste de prélèvement 11 afin d'optimiser tous les déplacements et les temps de préparation des colis et d'assurer la synchronisation entre l'arrivée d'un colis en préparation et les contenants des produits correspondants au poste de prélèvement 11. Bien entendu, ce système informatique de gestion central 13 pourra être subdivisé en plusieurs unités et couches hiérarchiques communicant entre elles, selon des architectures connues de l'Homme de l'Art.

Selon une caractéristique essentielle de l'invention, l'ensemble convoyeur principal 12 comporte des moyens permettant l'ordonnancement des contenants 7 de produits en fonction de leur ordre sur la liste de commande, de sorte qu'ils se présentent dans cet ordre au poste de prélèvement 11.

En référence à la figure 1, les moyens d'ordonnancement comprennent une zone intermédiaire tampon située entre la sortie du magasin 2 et un premier brin de convoyage 14, dit brin d'entrée/sortie.

Selon la variante de réalisation de l'invention représentée sur la figure 1, la zone intermédiaire tampon est constituée de paires de convoyeurs intermédiaires respectivement d'entrée 15 et de sortie 16, disposés de part de d'autre de chacun des élévateurs 10 et transversalement par rapport au brin d'entrée/sortie 14.

Les moyens d'ordonnancement comprennent également un second brin de convoyage 17, dit brin d'accumulation, parallèle et adjacent au premier brin 14 et attenant au poste de prélèvement 11. Les deux brins de convoyage 14,17 sont situés horizontalement au même niveau. Les contenants 7 de produits sont transposés entre les brins 14, 17 au niveau de zones de transfert 18 par des organes de transfert et le sens d'avancement des deux brins 14, 17 est opposé, de sorte que la circulation des contenants de produits entre les entrées/sorties du magasin 2 et le poste de prélèvement 11 se fasse en boucle, dans un sens ou dans l'autre. En référence à la figure 1, le sens de circulation représenté des contenants sur les brins de convoyage 14, 17 s'effectue ici dans le sens trigonométrique. En outre, le convoyage des contenants 7 sera de préférence effectué par pas, un pas étant légèrement plus long que la longueur maximale prédéfinie des contenants 7.

Le transfert des contenants 7 au niveau d'entrée/sortie d'un élévateur 10, à partir d'une navette 9 vers le convoyeur intermédiaire de sortie 16 ou inversement depuis le convoyeur intermédiaire d'entrée 15 vers une navette 9, est accompagné par un dispositif mécanique également surveillé par le système informatique central 13. Ce dispositif est nécessaire afin de dégager ou bien d'approcher le contenant 7 de la navette 9 afin que le mouvement vertical de l'élévateur 10 soit effectué en toute sécurité et sans gêne pouvant provenir d'un problème de chargement ou déchargement d'un contenant 7 sur ou depuis ladite navette 9. Le convoyage sur les convoyeurs intermédiaires 15, 16 peut être réalisé par des rouleaux libres, pouvant être entraînés à volonté par des rouleaux moteurs, via l'utilisation de bracelets entre deux rouleaux, de proche en proche.

Les mécanismes de transfert des contenants 7 entre le brin d'entrée/sortie 14 et les convoyeurs intermédiaires 15, 16 sont de types bien connus de l'homme de l'art.

Selon une variante de réalisation préférée, les brins de convoyage 14, 17 sont constitués par des rouleaux libres à axe horizontal pouvant être entraînés à volonté en rotation, par exemple par friction d'une courroie lécheuse, ladite courroie étant débrayable, ou par des rouleaux moteurs, via l'utilisation de bracelets entre deux rouleaux de proche en proche. Les rouleaux des brins de convoyage peuvent être freinés. Bien sûr, l'Homme de l'Art pourra mettre en oeuvre tout autre système de convoyage connu, tel que des systèmes à bande unique, multi-bandes ou à bande modulaire, sans sortir du cadre de la présente invention.

En référence à la figure 1, l'ensemble convoyeur principal 12 comporte au moins à chacune de ses extrémités une zone de transfert 18. De préférence et avantageusement, il comportera plusieurs zones de transfert 18, au moins une par ensemble de rangement 3 sauf pour l'ensemble qui est situé juste en face du poste de prélèvement 11 afin d'éviter un engorgement en contenants 7 au niveau du poste de prélèvement 11. Dans ces zones de transfert 18 opèrent des organes de transfert permettant de transposer les contenants 7 de produits d'un brin à l'autre. Idéalement, chaque zone de transfert sera située sur l'emplacement d'un pas sur chacun des brins d'entrée/sortie 14 et d'accumulation 17.

Les brins de convoyage 14, 17 sont situés horizontalement au même niveau. Selon une variante d'exécution préférée de l'invention les organes de transfert sont constitués par des tables de transfert munies de courroies d'entraînement des contenants, selon un axe perpendiculaire au sens d'avancement sur les brins 14, 17, lesdites courroies étant disposées entre des rouleaux des brins de convoyage 14, 17 et pouvant être mises en contact à volonté avec la face inférieure des contenants 7 de produits afin de les transposer ou non d'un brin à l'autre. Il va de soi que la nature des organes de transfert n'est en aucun cas limitative de l'invention et que l'Homme de l'Art pourra mettre en oeuvre d'autres systèmes mécaniques accomplissant les mêmes fonctions, comme par exemple des systèmes à poussoir ou à pince.

De préférence, comme représenté sur la figure 1, on placera le poste de prélèvement 11 le long du convoyeur d'accumulation 17 de sorte que l'opération de prélèvement ne soit pas réalisée sur le dernier pas du brin d'accumulation du convoyeur principal où est située la zone de transfert 181 entre le brin d'accumulation et le brin d'entrée/sortie, mais sur le pas précédent, ceci dans le but d'optimiser les temps de transfert. En effet, un transfert rectiligne étant plus rapide qu'un transfert transversal d'un brin sur l'autre, le transfert transversal est alors avantageusement effectué pendant le temps de prélèvement dans le contenant suivant.

En référence à la figure 1, le système 1 selon l'invention comporte également un convoyeur annexe 19 pour le réapprovisionnement du magasin 2 et l'évacuation des contenants 7 vides ou éventuellement en défaut. Ce convoyeur annexe 19 peut être placé à l'extrémité amont du brin de convoyage d'entrée/sortie 14, en aval du poste de prélèvement 11. Bien entendu, le système pourra être réapprovisionné par d'autres moyens, par exemple en prévoyant un élévateur à l'autre extrémité des allées, lequel élévateur serait en connexion avec un convoyeur de réapprovisionnement.

Selon une autre caractéristique avantageuse de l'invention, le contenant 7 de produits est disposé sur un plateau. Ce plateau comporte des moyens de coopération avec le système de préhension de la navette 9 et avec le dispositif mécanique de transfert entre ladite navette 9 et les convoyeurs intermédiaires 15, 16 au niveau d'entrée et/ou de sortie des élévateurs 10.

Un exemple détaillé de réalisation desdits moyens de coopération et du système de préhension de la navette est décrit dans une autre demande de brevet déposée concomitamment au nom de la demanderesse et qui porte spécifiquement sur cet aspect.

La longueur des pas de déplacement sur les brins de convoyage sera donc légèrement plus longue que la longueur d'un plateau.

Le plateau comporte en outre des moyens de stabilisation du contenant adaptables à différentes dimensions de contenant. Ainsi, le système selon l'invention peut accueillir indifféremment des contenants de produits constitués par un carton de colisage, c'est-à-dire le carton de conditionnement en vrac ou ordonné des produits tels que livrés par leur fabriquant ou distributeur, un bac standard disponible dans le commerce ou un bac spécifique, c'est-à-dire dont les formes et dimensions ont été spécifiquement conçues pour une utilisation dans un magasin automatisé, dans lesquels bacs les produits ont été transférés. Dans le cas de figure où les produits sont conditionnés dans leur carton de colisage, on économise avantageusement les coûts en temps et en main-d'oeuvre d'une étape de transfert dans des bacs spécifiques.

Bien sûr, le système selon l'invention pourra aussi être mis en oeuvre sans plateau, avec des bacs spécifiques dont le fond reprend les caractéristiques particulières de celui du plateau afin de coopérer avec le système de préhension particulier de la navette.

Selon une autre caractéristique de l'invention, la navette est du type autonome avec des moyens embarqués d'alimentation énergétique des moyens de propulsion. Selon une variante de réalisation particulièrement préférée, les moyens d'alimentation de la navette sont du type électrique et ils comprennent un moyen de stockage d'énergie électrique de type électrostatique. En particulier et avantageusement, le moyen de stockage comprend une batterie de supercondensateurs. Dans cette variante préférée, comme représenté à la figure 2, les élévateurs 10 et les extrémités des voies 8 au voisinage desdits élévateurs comprennent des tronçons de voie conducteurs, respectivement 20 et 21, aménagés en zone de recharge des navettes ; ces tronçons de voie 20, 21 sont reliés à une alimentation électrique commune 22 par allée.

On comprend bien l'avantage économique important de ce choix technologique, permettant de réduire au minimum les longueurs nécessaires de rails conducteurs pour la recharge de l'alimentation des navettes par rapport à des navettes directement alimentées par rail conducteur, ainsi que la simplicité et la fiabilité accrue du mode de fonctionnement desdites navettes par rapport à un système d'alimentation sur batteries. Le détail de réalisation de la navette alimentée par stockage électrostatique fait l'objet d'une autre demande de brevet déposée concomitamment au nom de la demanderesse, à laquelle on se reportera avantageusement pour un descriptif détaillé des caractéristiques propres à cette navette selon la variante d'exécution préférée de la présente invention.

L'invention a également pour objet un procédé de préparation de colis mettant en oeuvre le système précédemment décrit.

Ce procédé comporte une première étape de chargement sur une navette 9 de transfert du contenant 7 de produits correspondant à une ligne de commande donnée, suivie d'une étape de déplacement de la navette chargée sur les voies 8 de l'allée 4 de l'ensemble de rangement 3 dans lequel elle évolue, la navette 9 étant ensuite amenée par l'élévateur 10 jusqu'au niveau inférieur d'entrée/sortie du magasin de stockage 2. Ensuite, se succèdent une étape de transfert du contenant depuis la navette 9 vers la zone intermédiaire tampon, une étape d'ordonnancement des différents contenants sur le brin du convoyeur d'accumulation 17, une étape de prélèvement par un opérateur des produits dans le contenant selon la quantité désirée et la mise en colis desdits produits. Enfin, le procédé comporte une étape de retour du contenant dans le magasin de stockage.

Selon une première variante, l'étape d'ordonnancement sur le brin d'accumulation 17 consiste à maintenir le contenant p d'une ligne de commande donnée dans la zone intermédiaire tampon jusqu'à ce que le contenant p-1 de la ligne de commande précédente soit situé en aval sur la boucle de circulation du brin d'entrée/sortie 14 et du brin d'accumulation 17, puis à transférer le contenant p sur le brin d'entrée/sortie 14 et à le déplacer sur ledit brin jusqu'à la première zone de transfert 18 où le contenant p-1 est situé en aval de ladite zone, puis à transposer le contenant p depuis le brin d'entrée/sortie 14 vers le brin d'accumulation 17 de sorte que les contenants p-1 et p se succèdent au poste de prélèvement 11.

Selon une autre variante d'exécution, l'étape d'ordonnancement sur le brin d'accumulation 17 consiste à maintenir le contenant p d'une ligne de commande donnée dans la zone intermédiaire tampon jusqu'à ce que le contenant p-1 de la ligne de commande précédente soit situé sur le brin d'accumulation 17, ailleurs qu'à son extrémité la plus éloignée du poste de prélèvement 11, et que le chemin jusqu'à la prochaine zone de transfert 18 soit libre, puis à transférer le contenant p sur le brin d'entrée/sortie 14 et à le déplacer sur ledit brin jusqu'à la première zone de transfert 18 où le contenant p-1 est situé en aval de ladite zone, puis à transposer le contenant p depuis le brin d'entrée/sortie 14 vers le brin d'accumulation 17 de sorte que les contenants p-1 et p se succèdent au poste de prélèvement 11.

Bien entendu, les deux variantes du procédé décrites ci-dessus sont donnés à titre d'exemple non limitatif et l'Homme de l'art pourra concevoir pour cette étape d'ordonnancement d'autres modes de gestion des déplacements des colis sur l'ensemble convoyeur principal 12 selon l'invention.

On décrira maintenant le principe de fonctionnement du système. Dès qu'une nouvelle liste de commande est déclenchée par le système informatique central 13 en vue de l'arrivée d'un colis 100 à préparer au niveau du poste de prélèvement, des ordres de mission sont transmis aux navettes 9 qui vont, parallèlement, chacune prélever dans les alvéoles 6 un contenant 7 correspondant aux premières lignes de commande. Les navettes chargées reviennent ensuite vers les élévateurs 10 qui vont prendre en charge selon leur disponibilité et leur ordre de priorité, chacune des navettes 9. La gestion des cycles d'attente de l'élévateur est assurée par le système informatique central 13, qui prend également en compte le niveau de charge électrique de chacune des navettes.

Au niveau de sortie des élévateurs 10, la navette 9 s'acquitte de sa mission, c'est-à-dire qu'elle dépose le contenant 7 sur le convoyeur intermédiaire de sortie 16. Puis l'élévateur 10 emmène la navette 9, à vide ou chargée d'un contenant de retour du poste de prélèvement 11 et qui attendait sur le convoyeur intermédiaire d'entrée 15 à proximité de l'élévateur 10, vers un niveau où elle ira prélever un nouveau contenant 7 après avoir déposé dans une alvéole de stockage 6 disponible le contenant 7 à ranger, le cas échéant.

Les contenants 7 déposés sur les convoyeurs intermédiaires de sortie 16 sont progressivement transférés sur le brin d'entrée/sortie 14 et le brin d'accumulation 17 de l'ensemble convoyeur principal 12 selon le principe d'ordonnancement du procédé précédemment décrit, de sorte que les contenants se présentent dans l'ordre des lignes de commande au poste de prélèvement 11. En outre, le système central informatique synchronise l'arrivée au poste de prélèvement des premiers contenants d'une commande avec celle du colis à préparer. A ce poste, l'opérateur prélève la quantité désirée des produits et les place dans le colis 100 en cours de préparation. Ensuite, le contenant 7 retourne sur le brin d'entrée/sortie 14 puis sur les convoyeurs intermédiaires d'entrée 15 du magasin et attend d'être pris en charge par une navette 9 qui vient acquitter sa mission de chargement précédent.

Après son passage au poste de prélèvement 11, si un contenant 7 est vidé de son contenu ou si la quantité de produits qu'il contient a atteint un seuil de renouvellement prédéfini, celui-ci sera dirigé vers le convoyeur annexe 19 qui assurera son évacuation du système 1 et introduira dans le système un nouveau contenant plein de la référence de produits concernée.

Bien entendu, chaque contenant ou plateau de support de ces contenants comportera des moyens d'identification du type code à barre ou étiquette RFID permettant au système de gestion central de localiser précisément chacun des contenants. Des lecteurs de ces moyens d'identification seront disposés sur les convoyeurs aux intersections de transfert et juste en amont du poste de prélèvement et pourront optionnellement équiper les navettes de transfert.

On notera que le nombre de navettes par allée peut être librement choisi entre 1 et n, où n est le nombre de niveaux des étagères de rangement de l'allée, en fonction de l'application envisagée, et notamment des paramètres tels que la vitesse de rotation du stock, le temps d'accès maximum désiré à un objet, le coût de l'installation, etc.

De préférence, afin d'optimiser le taux d'occupation des navettes et le coût global de l'installation, on choisira un nombre de navettes par allée compris entre un et cinq, de préférence entre une et trois, pour des étagères comportant de huit à quinze niveaux.

On comprend bien que, de manière générale, le magasin de stockage du système selon l'invention pourrait ne comprendre qu'une seule allée et qu'à chaque allée soit associée une seule ou deux étagères de stockage, sans pour autant sortir du cadre de la présente invention.

Enfin, il va de soi que les exemples que l'on vient de donner ne sont donc que des illustrations particulières en aucun cas limitatives des domaines d'application de l'invention.

## Revendications

1. Système (1) automatisé de préparation de colis (100) de produits comprenant :
- un magasin de stockage (2) comportant au moins un ensemble de rangement (3), chaque ensemble de rangement étant formé d'une allée (4) desservant de part et d'autre une étagère de stockage (5) à plusieurs niveaux, ladite étagère (5) étant subdivisée sur sa longueur en alvéoles de stockage (6) destinées à accueillir chacune un contenant (7) de produits, cette allée (4) recevant, à chaque niveau de rangement, des voies (8) pour le déplacement d'une navette (9) de transfert permettant la mise en place ou l'extraction desdits contenants (7) à l'intérieur des alvéoles (6) et un élévateur (10) étant disposé à au moins une des extrémités de l'allée (4), l'élévateur (10) pouvant amener une navette (9) d'un niveau à un autre et comportant un niveau d'entrée et/ou de sortie du magasin (2) pour les contenants (7) de produits,
- un poste de prélèvement (11) où un opérateur prépare le colis (100) en y plaçant la quantité désirée de produits,
- un ensemble convoyeur principal (12) amenant le contenant (7) de produits depuis l'entrée/sortie du magasin (2) au poste de prélèvement (11) et réciproquement, l'ensemble convoyeur principal (12) comprenant un premier brin de convoyage (14), dit brin d'entrée/sortie, un second brin de convoyage (17), dit brin d'accumulation, adjacent au premier brin (14) et attenant au poste de prélèvement (11), lesdits brins de convoyage (14, 17) étant situés horizontalement au même niveau, et une zone de transfert (18, 181) à chacune de ses extrémités, les contenants (7) de produits étant transposés entre les brins (14, 17) au niveau des zones de transfert (18, 181) et le sens d'avancement des deux brins étant opposé, de sorte que la circulation des contenants (7) de produits entre les entrées/sorties du magasin (2) et le poste de prélèvement (11) se fasse en boucle,
- une zone intermédiaire tampon située entre la sortie du magasin (2) et le premier brin de convoyage (14),
- un système informatique de gestion central (13) contrôlant les déplacements de chaque colis (100), chaque navette (9), chaque élévateur (10) et chaque contenant (7) de produits et gérant la liste de commande de produits associée à chaque colis, ladite liste étant constituée de lignes de commande indiquant chacune le produit et la quantité désirée,
l'ensemble convoyeur principal (12) comportant des moyens d'ordonnancement des contenants (7) de produits en fonction de leur ordre sur la liste de commande, de sorte qu'ils se présentent dans cet ordre au poste de prélèvement (11), lesdits moyens d'ordonnancement comprenant lesdits brins de convoyage (14, 17), ladite zone intermédiaire tampon et lesdites zones de transfert (18, 181),
**caractérisé en ce que** lesdits brins de convoyage (14, 17) sont parallèles, **en ce que** l'ensemble convoyeur principal (12) comporte au moins une zone de transfert supplémentaire (18, 181), et **en ce que** les contenants (7) de produits sont transposés entre les brins de convoyage (14, 17) au niveau des zones de transfert (18, 181) par des organes de transfert.

2. Système (1) selon la revendication précédente, **caractérisé en ce que** la zone intermédiaire tampon est constituée de paires de convoyeurs intermédiaires respectivement d'entrée (15) et de sortie (16), disposés de part de d'autre de chacun des élévateurs (10) à leur niveau d'entrée et/ou de sortie du magasin (2) et transversalement par rapport au brin d'entrée/sortie (14) de l'ensemble convoyeur principal (12) .

3. Système (1) selon l'une quelconque des revendications précédentes, **caractérisé en ce que** les brins de convoyage (14, 17) sont constitués par des rouleaux à axe horizontal, pouvant être entraînés à volonté en rotation et **en ce que** les organes de transfert sont constitués par des tables de transfert munies de courroies d'entraînement des contenants (7) selon un axe perpendiculaire au sens d'avancement sur les brins (14, 17), lesdites courroies étant disposées entre des rouleaux des brins de convoyage (14,17) et pouvant être mises en contact à volonté avec la face inférieure des contenants (7) de produits afin de les transposer ou non d'un brin à l'autre.

4. Système (1) selon l'une quelconque des revendications 1 ou 2, **caractérisé en ce que** les organes de transfert sont constitués par des systèmes à poussoir ou à pince .

5. Système (1) selon l'une quelconque des revendications précédentes, **caractérisé en ce que** le contenant (7) de produits est disposé sur un plateau.

6. Système (1) selon l'une quelconque des revendications précédentes, **caractérisé en ce que** le contenant (7) de produits est pris parmi : un carton de colisage, un bac standard du commerce ou un bac spécifique dans lequel les produits ont été transférés.

7. Système (1) selon l'une quelconque des revendications précédentes, **caractérisé en ce que** le plateau comporte des moyens de stabilisation du contenant (7) adaptables à différentes dimensions de contenant.

8. Système (1) selon l'une quelconque des revendications précédentes, **caractérisé en ce que** la navette (9) est du type autonome avec des moyens embarqués d'alimentation électrique des moyens de propulsion de la navette, lesdits moyens d'alimentation comprenant un moyen de stockage d'énergie électrique de type électrostatique, les élévateurs (10) et les extrémités des voies (8) au voisinage desdits élévateurs (10) comprenant une zone de recharge (20, 21) des navettes.

9. Procédé de préparation de colis (100) en fonction d'une liste de commande de produits constituée de lignes de commande indiquant chacune le produit et la quantité désirée dudit produit mettant en oeuvre le système (1) selon l'une quelconque des revendications 1 à 8, ledit procédé comportant une première étape de chargement sur une navette de transfert (9) du contenant (7) de produits correspondant à une ligne de commande donnée, suivie d'une étape de déplacement de la navette (9) chargée sur les voies (8) de l'allée (4) de l'ensemble de rangement (3) dans lequel elle est située, la navette (9) étant ensuite amenée par l'élévateur (10) jusqu'au niveau de sortie du magasin de stockage (2), puis d'une étape de transfert du contenant (7) depuis la navette vers la zone intermédiaire tampon, une étape d'ordonnancement des différents contenants (7) sur le brin d'accumulation (17), une étape de prélèvement par un opérateur des produits dans le contenant (7) selon la quantité désirée et la mise en colis desdits produits et enfin une étape de retour du contenant (7) dans le magasin de stockage (2),
l'étape d'ordonnancement sur le brin d'accumulation (17) consistant à:
- maintenir le contenant p d'une ligne de commande donnée dans la zone intermédiaire tampon :
* jusqu'à ce que le contenant p-1 de la ligne de commande précédente soit situé en aval sur la boucle de circulation du brin d'entrée/sortie (14) et du brin d'accumulation (17), ou bien
* jusqu'à ce que le contenant p-1 de la ligne de commande précédente soit situé sur le brin d'accumulation (17), ailleurs qu'à son extrémité la plus éloignée du poste de prélèvement (11), et que le chemin jusqu'à la prochaine zone de transfert soit libre,
- puis à transférer le contenant p sur le brin d'entrée/sortie (14) et à le déplacer sur ledit brin jusqu'à la première zone de transfert (18) où le contenant p-1 est situé en aval de ladite zone,
- puis à transposer le contenant p depuis le brin d'entrée/sortie (14) vers le brin d'accumulation (17) de sorte que les contenants p-1 et p se succèdent au poste de prélèvement (11).

## Claims

1. Automated system (1) for preparing product parcels (100), comprising:
- a storage magazine (2) comprising at least one storage assembly (3), each storage assembly being formed by a lane (4) serving on either side storage racks (5) with several levels, said racks being subdivided over their length into storage compartments (6) intended each to accept a product container (7), this lane receiving, at each storage level, tracks (8) for the movement of a shuttle (9) allowing the placing or extraction of said containers inside the compartments and an elevator (10) being disposed at least one of the ends of the lane, the elevator being able to bring a shuttle from one level to another and comprising an input and/or output level of the magazine for the product containers,
- a picking station (11) where an operator prepares the parcel by placing therein the desired quantity of products,
- a main conveyor assembly (12) bringing the container of products from the input/output of the magazine to the picking station and vice versa, the main conveyor assembly comprising a first conveying section (14), referred to as the input/output section, a second conveying section (17), referred to as the accumulation section, adjacent to the first conveying section and adj acent to the picking station, the said conveying sections being located horizontally at the same level, and a transfer zone (18, 181) at each of its ends, the product containers being transposed between the conveying sections at the transfer zones and the direction of movement of the two sections being opposite, so that the circulation of the product containers between the input/outputs of the magazine and the picking station takes place in a loop,
- an intermediate buffer zone located between the output of the magazine and the first conveying section,
- a central management computer system (13) controlling the movements of each parcel, each shuttle, each elevator and each product container and managing the product order list associated with each parcel, said list consisting of order lines each indicating the desired product and quantity, the main conveyor assembly comprising means of sequencing the product containers according to their order on the order list, so that they are presented to the picking station in this order, said sequencing means comprising said conveying sections, said intermediate buffer zone and said transfer zones,
**characterized in that** the conveying sections (14, 17) are parallel, **in that** the main conveyor assembly (12) comprises a supplemental transfer zone (18, 181), and **in that** the product containers are transposed between the conveying sections at the transfer zones by transfer members.

2. An automated system according to claim 1, **characterized in that** the intermediate buffer zone consists of pairs of intermediate conveyors, respectively intermediate input conveyor (15) and intermediate output conveyor (16), disposed on either side of each of the elevators (10) at their input and/or output level of the magazine (2) and transversely with respect to the input/output section (14) of the main conveyor assembly (12).

3. An automated system according to claim 1, **characterized in that** the conveying sections (14, 17) are formed by rollers with a horizontal axis, able to be driven as required in rotation, and **in that** the transfer members are formed by transfer tables provided with belts driving the containers along an axis perpendicular to the direction of travel on the sections, said belts being disposed between rollers of the conveying sections and being able to put in contact as required with the bottom face of the product containers in order to transport them or not from one section to another.

4. An automated system according to claim 1, **characterized in that** the transfer members are formed by pusher or clamp systems.

5. An automated system according to claim 1, **characterized in that** the product container (7) is disposed on a plate.

6. An automated system according to claim 1, **characterized in that** the product container (7) is taken from: a packaging carton, a standard commercially available box or a dedicated box into which the products have been transferred.

7. An automated system according to claim 5, **characterized in that** the plate comprises means of stabilising the container (7) adaptable to different container dimensions.

8. An automated system according to claim 1, **characterized in that** the shuttle (9) is of the self-contained type with onboard of electrical supply means to the shuttle propulsion means, said supply means comprising an electrical energy storage means of the electrostatic type, the elevators (10) and the ends of the tracks (8) in the vicinity of said elevators comprising a recharging zone (20, 21) for recharging the shuttles.

9. Method of preparing parcels (100) according to a product order list consisting of order lines each indicating the product and the required quantity of said product using the system (1) according to claim 1, said method comprising a first step of loading onto a transfer shuttle (9) the product container (7) corresponding to a given order line, followed by a step of moving the loaded shuttle on the tracks (8) of the lane (4) of the storage assembly (3) in which it is located, the shuttle then being brought by the elevator (10) as far as the output level of the storage magazine (2), then a step of transferring the container (7) from the shuttle to the intermediate buffer zone, a step of sequencing the various containers on the accumulation section (17), a step of the picking by an operator of the products in the container according to the required quantity and the packaging of said products and finally a step of return of the container to the storage magazine,
**characterized in that** the sequencing step on the accumulation section (17) consists of:
- keeping the container p of a given order line in the intermediate buffer zone:
* until the container p-1 of the previous order line is located downstream on the circulation loop of the input/output section (14) and accumulation section (17), or
* until the container p-1 of the previous order line is located on the accumulation section (17), otherwise than at its end furthest end from the picking station (11), and until the path as far as the next transfer zone is free,
- then transferring the container p onto the input/output section (14) and moving it on said section as far as the first transfer zone (18) where the container p-1 is located downstream of said zone,
- then transposing the container p from the input/output section (14) to the accumulation section (17) so that the containers p-1 and p follow each other at the picking station (11).

## Patentansprüche

1. Automatisiertes System (1) für die Herstellung von Paketen (100) für Produkte, das Folgendes umfasst:
- ein Lager (2), das mindestens eine Ablageeinheit (3) umfasst, wobei jede Ablageeinheit durch einen Gang (4) gebildet ist, der auf beiden Seiten ein Lagerregal (5) mit mehreren Ebenen bedient, wobei das Regal (5) über seine Länge in Lagerplätze (6) unterteilt ist, die dazu bestimmt sind, jeweils einen Behälter (7) für Produkte zu empfangen, wobei dieser Gang (4) auf jeder Ablageebene Gleise (8) für die Fortbewegung eines Transportwagens (9), der die Abstellung oder die Entnahme der Behälter (7) im Inneren der Lagerplätze (6) ermöglicht, und einen Aufzug (10) aufnimmt, der an mindestens einem der Enden des Gangs (4) angeordnet ist, wobei der Aufzug (10) einen Wagen (9) von einer Ebene zur anderen führen kann und eine Eingangs- und/oder Ausgangsebene des Lagers (2) für die Produktebehälter (7) umfasst,
- eine Entnahmestelle (11), an der ein Bediener das Paket (100) herstellt, indem er die gewünschte Menge von Produkten darin unterbringt,
- eine Hauptfördereinheit (12), die den Produktebehälter (7) vom Eingang/Ausgang des Lagers (2) zur Entnahmestelle (11) führt und umgekehrt, wobei die Hauptfördereinheit (12) einen ersten Fördertrum (14), der Eingangs/Ausgangstrum genannt wird, einen zweiten Fördertrum (17), der Sammeltrum genannt wird, dem ersten Trum (14) benachbart ist und an die Entnahmestelle (11) angrenzt, wobei die Fördertrümer (14, 17) sich horizontal auf derselben Ebene befinden, und einen Überführungsbereich (18, 181) an jedem ihrer Enden umfasst, wobei die Produktebehälter (7) zwischen den Trümern (14, 17) im Bereich der Überführungsbereiche (18, 181) übertragen werden und die Bewegungsrichtung der zwei Trümer entgegengesetzt ist, derart, dass der Umlauf der Produktebehälter (7) zwischen den Eingängen/Ausgängen des Lagers (2) und der Entnahmestelle (11) in einer Schleife erfolgt,
- einen Zwischenpufferbereich, der sich zwischen dem Ausgang des Lagers (2) und dem ersten Fördertrum (14) befindet,
- ein zentrales elektronisches Datenverarbeitungssystem zur Verwaltung (13), das die Fortbewegungen jedes Pakets (100), jedes Wagens (9), jedes Aufzugs (10) und jedes Produktebehälters (7) steuert und die jedem Paket zugehörige Produktebestellungsliste verwaltet, wobei die Liste aus Bestellzeilen besteht, die jeweils das Produkt und die gewünschte Menge angeben,
wobei die Hauptfördereinheit (12) Mittel zum Ordnen der Produktebehälter (7) in Abhängigkeit von ihrer Reihenfolge auf der Bestellliste umfasst, derart, dass sie in dieser Reihenfolge an der Entnahmestelle (11) erscheinen, wobei die Ordnungsmittel die Fördertrümer (14, 17), den Zwischenpufferbereich und die Überführungsbereiche (18, 181) umfassen,
**dadurch gekennzeichnet, dass** die Fördertrümer (14, 17) parallel sind, dadurch, dass die Hauptfördereinheit (12) mindestens einen zusätzlichen Überführungsbereich (18, 181) umfasst, und dadurch, dass die Produktebehälter (7) zwischen den Fördertrümern (14, 17) im Bereich der Überführungsbereiche (18, 181) durch Überführungsorgane übertragen werden.

2. System (1) nach dem vorhergehenden Anspruch, **dadurch gekennzeichnet, dass** der Zwischenpufferbereich aus Paaren von Zwischeneingangs- (15) beziehungsweise -ausgangsförderern (16) besteht, die auf beiden Seiten von jedem der Aufzüge (10) an ihrem Eingangs- und/oder -ausgangsbereich des Lagers (2) und quer zum Eingangs/Ausgangstrum (14) der Hauptfördereinheit (12) angeordnet sind.

3. System (1) nach einem der vorhergehenden Ansprüche, **dadurch gekennzeichnet, dass** die Fördertrümer (14, 17) aus Rollen mit horizontaler Achse bestehen, die beliebig drehbar angetrieben werden können, und dadurch, dass die Überführungsorgane aus Überführungsbahnen, die mit Riemen zum Antrieb der Behälter (7) gemäß einer Achse versehen sind, die quer zur Bewegungsrichtung auf den Trümern (14, 17) ist, wobei die Riemen zwischen den Rollen der Fördertrümer (14, 17) angeordnet sind und nach Belieben mit der Unterseite der Produktebehälter (7) in Berührung gebracht werden können, um sie von einem Trum zum anderen umzustellen oder nicht.

4. System (1) nach einem der Ansprüche 1 oder 2, **dadurch gekennzeichnet, dass** die Überführungsorgane aus Systemen mit Aufschieber oder Greifer bestehen.

5. System (1) nach einem der vorhergehenden Ansprüche, **dadurch gekennzeichnet, dass** der Produktebehälter (7) auf einer Platte angeordnet ist.

6. System (1) nach einem der vorhergehenden Ansprüche, **dadurch gekennzeichnet, dass** der Produktebehälter (7) zwischen Folgendem festsitzt: einem Umkarton, einem handelsüblichen Standardbehälter oder einem spezifischen Behälter, in dem die Produkte überführt wurden.

7. System (1) nach einem der vorhergehenden Ansprüche, **dadurch gekennzeichnet, dass** die Platte Mittel zur Stabilisierung des Behälters (7) umfasst, die an verschiedene Behälterabmessungen angepasst werden können.

8. System (1) nach einem der vorhergehenden Ansprüche, **dadurch gekennzeichnet, dass** der Wagen (9) vom autonomen Typ mit eingebauten Mitteln zur Stromversorgung der Antriebsmittel des Wagens ist, wobei die Versorgungsmittel ein Mittel zur Speicherung von elektrischer Energie des elektrostatischen Typs umfassen, wobei die Aufzüge (10) und die Enden der Gleise (8) in der Nähe der Aufzüge (10) einen Bereich zur Wiederaufladung (20, 21) der Wagen umfassen.

9. Verfahren zur Herstellung von Paketen (100) in Abhängigkeit von einer Produktebestellungsliste, die aus Bestellungszeilen besteht, die jeweils das Produkt und die gewünschte Menge des Produkts angeben, das das System (1) nach einem der Ansprüche 1 bis 8 einsetzt, wobei das Verfahren einen ersten Schritt des Ladens des Produktebehälters (7), der einer gegebenen Bestellungszeile entspricht, auf einen Transportwagen (9), gefolgt von einem Schritt der Fortbewegung des beladenen Wagens (9) auf den Gleisen (8) des Gangs (4) der Ablageeinheit (3), in dem er sich befindet, wobei der Wagen (9) dann durch den Aufzug (10) bis zur Ausgangsebene des Lagers (2) geführt wird, dann einen Schritt des Überführens des Behälters (7) von dem Wagen in Richtung eines Zwischenpufferbereichs, einen Schritt des Ordnens der verschiedenen Behälter (7) auf dem Sammeltrum (17), einen Schritt des Entnehmens der Produkte im Behälter (7) gemäß der gewünschten Menge und des Verpackens der Produkte durch einen Bediener und schließlich einen Schritt der Rückkehr des Behälters (7) zum Lager (2) umfasst,
wobei der Schritt des Ordnens auf dem Sammeltrum (17) aus Folgendem besteht:
- Halten des Behälters p einer gegebenen Bestellungszeile im Zwischenpufferbereich:
* bis der Behälter p-1 der vorhergehenden Bestellungszeile sich auf der Umlaufschleife des Eingangs/Ausgangstrums (14) und des Sammeltrums (17) nachgelagert befindet, oder
* bis der Behälter p-1 der vorhergehenden Bestellungszeile sich auf dem Sammeltrum (17) anderswo als an seinem am weitesten von der Entnahmestelle (11) entfernen Ende befindet und der Weg zum nächsten Überführungsbereich frei ist,
- dann Überführen des Behälters p auf dem Eingangs/Ausgangstrum (14) und sein Fortbewegen auf dem Trum bis zum ersten Überführungsbereich (18), wo der Behälter p-1 sich dem Bereich nachgelagert befindet,
- dann Übertragen des Behälters p vom Eingangs/Ausgangstrum (14) in Richtung des Sammeltrums (17), derart, dass die Behälter p-1 und p an der Entnahmestelle (11) aufeinander folgen.
